# EUROPEAN PATENT APPLICATION

(11) **EP 4 844 139 A1**
(43) Date of publication of application: **25.11.2026**
(21) Application number: 25742021.6
(22) Date of filing: 17.01.2025
(51) Int. Cl.: E02F 3/43, E02F 9/20, E02F 9/22

(54) **WORK MACHINE**

(30) Priority: 17.01.2024 JP 2024005709
(71) Applicant: Hitachi Construction Machinery Co., Ltd., Tokyo 110-0015 (JP)
(72) Inventor: IZAWA, Kei, Tsuchiura-shi, Ibaraki 300-0013 (JP); KUMAGAI, Kento, Tsuchiura-shi, Ibaraki 300-0013 (JP); SUZUKI, Yusuke, Tsuchiura-shi, Ibaraki 300-0013 (JP); AMANO, Hiroaki, Tsuchiura-shi, Ibaraki 300-0013 (JP); SHIRATO, Shuu, Tsuchiura-shi, Ibaraki 300-0013 (JP)
(74) Representative: MERH-IP Matias Erny Reichl Hoffmann Patentanwälte PartG mbB
(86) International application number: PCT/JP2025/001334
(87) International publication number: WO 2025/154796

(57) **Abstract**

Based on the posture of the work implement and the required motion direction, an estimated movement trajectory of the bucket toe is calculated and a positional relationship between the target surface and the estimated movement trajectory is calculated. When it is determined based on the calculated positional relationship that the estimated movement trajectory intersects with the target surface, the toe speed of the bucket is limited while maintaining the required motion direction. When it is determined based on the calculated positional relationship that the estimated movement trajectory does not intersect with the target surface, the toe speed of the bucket is controlled at the toe speed based on an operation signal output from the operation device. As a result, when there is no possibility of deviating from the target surface, unnecessary speed limitations are not imposed, and even when the state changes to one where deviation toward the target surface is anticipated, good operability can be ensured by appropriately performing deceleration and stop control.

## Description

### Technical Field

The present invention relates to a work machine.

### Background Art

As work machines used for road construction, building construction, civil engineering work, dredging work, etc., there are known work machines comprising a travel body that travels by a power system, a work machine main body having a swing body rotatably attached to an upper portion of the travel body, and a multi-joint type work front attached to the work machine main body so as to be swingable in a vertical direction, with each front member constituting the work front being driven by a cylinder. One example of this is a so-called hydraulic excavator having a work front composed of a boom, an arm, a bucket, and the like. In addition, there are hydraulic excavators of this type that perform so-called machine control, in which a construction target surface for excavation is set in advance and boom operation and the like are automatically controlled in accordance with the operation amount of the arm operation by the operator so that the bucket can excavate along the construction target surface.

Machine control is a semi-automatic control function in which a controller controls front operation while an operator performs manual operations, and therefore, in addition to control accuracy, operator operability is also considered important. As conventional technologies related to machine control, for example, those described in Patent Document 1 and Patent Document 2 are known.

Patent Document 1 discloses a control system for a construction machine that, when calculating the speed limit of the work implement based on the target surface distance and the target speed of the work implement, limits the speed of the boom more than that of the arm, thereby relaxing the speed limit of the arm where the operator's operation intention is strongly expressed in excavation situations and minimizing the operator's discomfort.

Patent Document 2 describes determining whether there is a possibility that a work implement will intrude into a target surface during arm operation based on a set target surface and signals from a position sensor and a posture sensor. When it is determined that there is no possibility that the work implement will intrude into the target surface, control is performed so that the speed is not reduced even when the position of the work implement is close to the target surface. A work machine is disclosed that takes into account the operator's operation intention to move the work implement quickly in the vicinity of the excavation surface, avoids restrictions on the arm, and minimizes the operator's discomfort.

### Prior Art Document

### Patent Document

Patent Document 1 WO 2014/167718
Patent Document 2 WO 2021/064385

### Summary of the Invention

### Problems to be Solved by the Invention

However, in the conventional technique described in Patent Document 1, since the speed limit is calculated according to the distance of the work implement from the target surface, in the vicinity of the target surface, even if the trajectory of the tip of the bucket cannot deviate from the target surface, the operation speed is limited, which may result in a state contrary to the operator's intention to move quickly, thereby deteriorating operability.

In the conventional technique described in Patent Document 2, intrusion possibility is determined based on the posture state and the input state of the control lever, and the restriction of the work implement is determined accordingly. Therefore, when an input with a possibility of intrusion is suddenly made in a state where the speed is not limited because no intrusion was determined, rapid deceleration operation is required, which may cause the target surface to be deviated because the operation cannot be stopped, or shock due to rapid deceleration may occur, thereby impairing the operator's operability and workability.

The present invention has been made in view of the above, and an object of the present invention is to provide a work machine that does not impose unnecessary speed limits when there is no possibility of deviating from the target surface, and that can ensure good operability by appropriately performing deceleration and stop control even when the state changes to one in which deviation to the target surface is expected.

### Means for Solving the Problems

The present application includes a plurality of means for solving the above problems. To give one example, in a work machine having a travel body, an upper swing body provided so as to perform a swing motion with respect to the travel body, a work implement attached to the upper swing body and having a bucket that is swingable at least in a vertical direction, an actuator that drives the upper swing body and the work implement respectively, ana operation device that operates the actuator, an operation amount detection device that detects the operation amount of the operation device, a posture detection device that detects the postures of the upper swing body and the work implement, a target surface setting device for setting a target surface to be excavated by the bucket, a controller that calculates a required motion direction for the bucket based on the operation amount detected by the operation amount detection device and calculates a motion command value for the actuator so that the bucket does not exceed the target surface based on the required motion direction, and a drive device that drives the actuator based on the motion command value of the controller, the controller is configured to calculate an estimated movement trajectory of the tip of the bucket based on the posture of the work implement and the required motion direction and calculate a positional relationship between the target surface and the estimated movement trajectory, and in a case it is determined from the calculated positional relationship that the estimated movement trajectory intersects with the target surface, limit the tip speed of the bucket while maintaining the required motion direction, and in a case it is determined from the calculated positional relationship that the estimated movement trajectory does not intersect with the target surface, control the tip speed of the bucket at a tip speed based on an operation signal output by the operation device.

### Advantages of the Invention

According to the present invention, unnecessary speed limits are not imposed when there is no possibility of deviating from the target surface, and even when the state changes to one in which deviation from the target surface is expected, deceleration and stop control can be appropriately performed, and good operability can be ensured.

### Brief Description of the Drawings

[FIG. 1] A side view schematically showing the overall configuration of a hydraulic excavator as an example of a work machine.
[FIG. 2] A diagram showing the main controller extracted together with related configurations.
[FIG. 3] A functional block diagram showing the processing contents of the main controller.
[FIG. 4] A diagram showing the relationship between the target surface and the estimated movement trajectory of the tip of the bucket.
[FIG. 5] A diagram showing the relationship between the target surface and the estimated movement trajectory of the tip of the bucket.
[FIG. 6] A flowchart showing the processing contents of the main controller.
[FIG. 7] A flowchart showing the processing contents of the main controller.
[FIG. 8] A diagram showing the relationship between the target surface and the estimated movement trajectory of the tip of the bucket.
[FIG. 9] A diagram showing the relationship between the target surface and the estimated movement trajectory of the tip of the bucket.

### Modes for Carrying Out the Invention

Hereinafter, an embodiment of the present invention will be described with reference to the drawings.

### < subject device >

The subject of the present embodiment is composed of the work machine 1 and the construction target surface. The construction target surface is a construction target surface having so-called three-dimensional information, having information in the left-right direction in addition to the longitudinal direction of the work machine 1. The construction target surface may be set relative to the work machine 1, or may be set in a global coordinate system based on the construction site or the earth.

### < Configuring Devices >

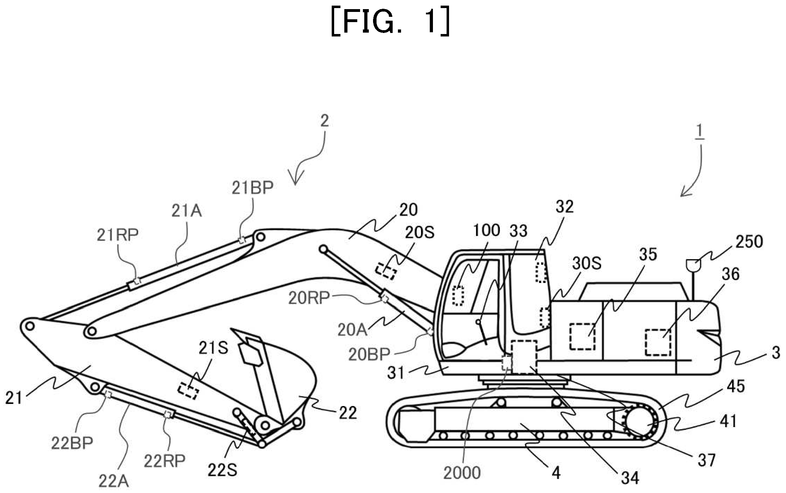

FIG. 1 is a side view schematically showing the overall configuration of a hydraulic excavator as an example of the work machine of the present embodiment.

As shown in FIG. 1, the work machine 1 includes a work front 2 (work implement), a swing body 3 (upper swing body), and a travel body 4. Note that the swing body 3 (upper swing body) and the travel body 4 constitute the work machine main body.

The work front 2 is configured to rotate with respect to the swing body 3, and the swing body 3 is configured to rotate with respect to the travel body 4, each around a connecting portion. The work front 2 includes a boom 20 having one end connected to the swing body 3, an arm 21 having one end connected to the boom 20, a bucket 22 having one end connected to the arm 21, a boom cylinder 20A having both ends connected to the boom 20 and the swing body 3 respectively, an arm cylinder 21A connected to the arm 21 and the boom 20 respectively, a link A22B, a link B22C, and a bucket cylinder 22A connected to the link B22C and the arm 21. Each of these members is configured to rotate in a vertical direction around the connecting portion. The travel body 4 includes a travel motor 41 and a crawler track 45.

The boom cylinder 20A, arm cylinder 21A, and bucket cylinder 22A each have a structure that extends and retracts by hydraulic pressure, and the extension and retraction can rotate the boom 20, arm 21, and bucket 22, respectively. The bucket 22 can be optionally replaced with attachments not shown, such as a grapple, breaker, ripper, magnet, bucket with rotary tilt, etc.

The boom 20 and arm 21 are each equipped with an IMU (Inertial Measurement Unit) (boom) 20S and IMU (arm) 21S for detecting the posture of the boom 20 and arm 21. Link A22B is equipped with an IMU (bucket) 22S for detecting the posture of the bucket 22. The IMU (boom) 20S, IMU (arm) 21S, and IMU (bucket) 22S are each composed of an angular velocity sensor and an acceleration sensor.

The boom cylinder 20A is equipped with a pressure sensor (boom rod) 20RP and a pressure sensor (boom bottom) 20BP for detecting load. The arm cylinder 21A is equipped with a pressure sensor (arm rod) 21RP and a pressure sensor (arm bottom) 21BP for detecting load. The bucket cylinder 22A is equipped with a pressure sensor (bucket rod) 22RP and a pressure sensor (bucket bottom) 22BP for detecting load.

The swing body 3 is equipped with a swing angle sensor 2S, IMU (swing body) 30S, main frame 31, operating room 32, main controller 34, drive unit 35, prime mover 36, swing load measuring device 37, and position sensor 250.

The swing angle sensor 2S is mounted so as to detect the relative angle between the travel body 4 and the swing body 3.

The IMU (swing body) 30S is equipped with an acceleration sensor and an angular velocity sensor, and is mounted so as to detect the inclination angle of the swing body 3.

The operating room 32 is equipped with an operating set 33, a setting input/display device 100, and a construction surface management device 2000.

The operating set 33 is composed of a control lever and is provided with an operation amount detection device that detects the amount by which the control lever is tilted. The operation amount detection device is composed of an operation amount detection sensor such as an angle sensor provided on the control lever, and is mounted so as to convert the target operation of each movable part requested by the operator into an electrical signal by detecting the amount by which the operator tilts the control lever.

The construction surface management device 2000 is connected to the setting input/display device 100 and is mounted so as to manage and store the construction target surface that is the target for excavation by the work front 2.

The setting input/display device 100 is composed of a display monitor and a touch panel, and is mounted so as to display the posture of the work machine 1, information on the construction target surface, the positional relationship and distance between the construction target surface and the work front 2, etc., and to set various dimensions and mass of the work front 2.

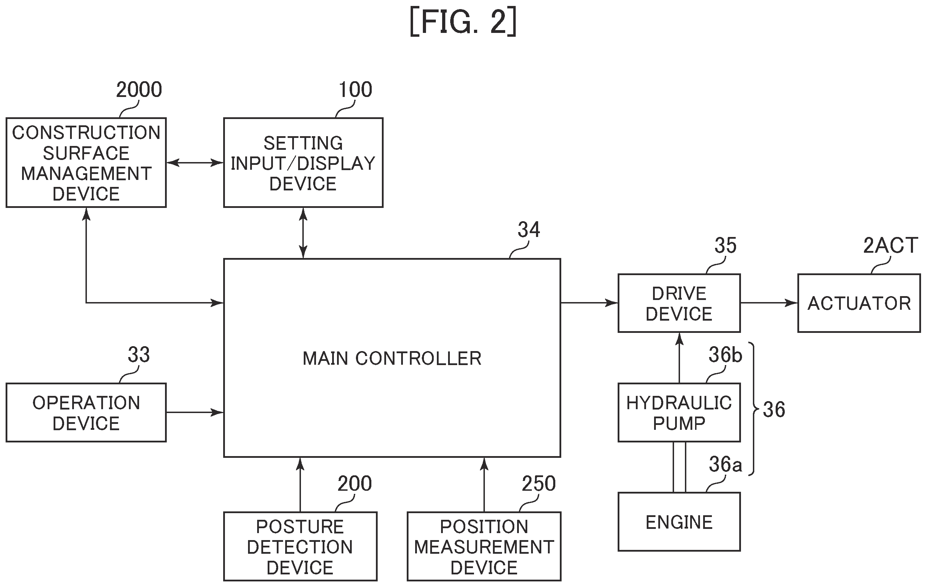

FIG. 2 is a diagram showing the main controller extracted together with related configurations.

As shown in FIG. 2, the drive unit 35 is composed of an electromagnetic control valve and a directional switching valve, and is mounted so as to operate the boom cylinder 20A, arm cylinder 21A, and bucket cylinder 22A, which are drive actuators, by driving the electromagnetic control valve and the directional switching valve in accordance with the motion command value instructed from the main controller 34.

The prime mover 36, which is a power source, is composed of an engine 36a and a hydraulic pump 36b connected to the output shaft of this engine 36a. More specifically, the hydraulic pump 36b is driven by the power of the engine 36a, and is mounted so as to generate the power necessary for the operation of the work machine 1 by the pressure oil discharged by the hydraulic pump 36b.

The swing load measuring device 37 is composed of a pressure sensor and is mounted so as to measure the load in the swing direction of the swing body 3.

The travel body 4 is equipped with crawler tracks, and the operator can cause the work machine 1 to travel by operating the operating set 33. The travel body 4 is not limited to one equipped with crawler tracks, and may be one equipped with traveling wheels made of tires. In addition, in this embodiment, a work machine that is movable by being equipped with a travel body 4 has been exemplified and described, but is not limited to this, and may be, for example, one that is fixed at a construction site.

The configuration of the work machine 1 is an example, and may have similar devices and configurations.

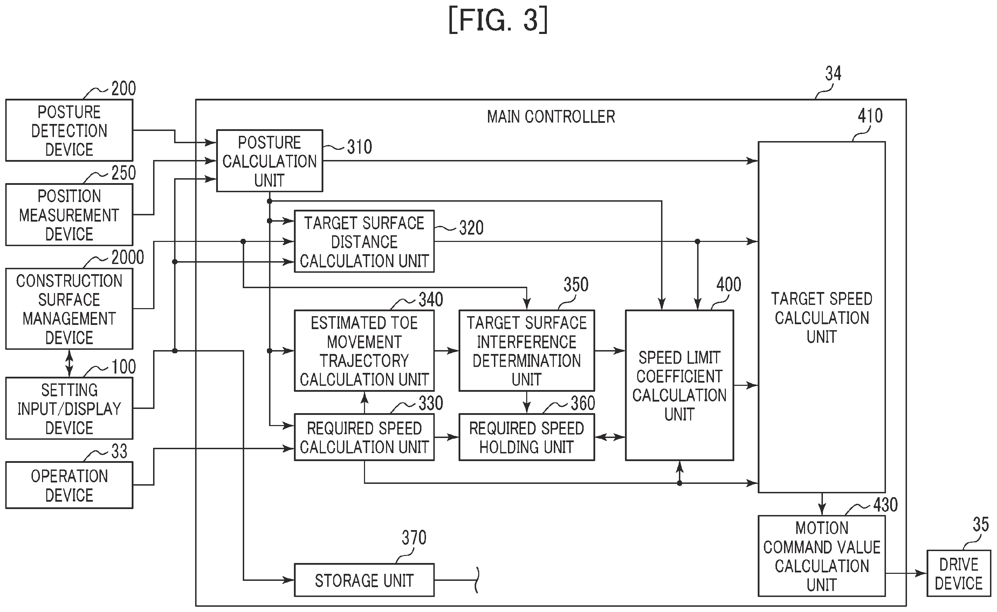

FIG. 3 is a functional block diagram showing the processing contents of the main controller.

As shown in FIG. 3, the main controller 34 provided in the work machine 1 is connected to the operating set 33, posture detection device 200, load measuring device 210, position sensor 250, drive unit 35, construction surface management device 2000, and setting input/display device 100.

The construction surface management device 2000 is connected to the setting input/display device 100.

The drive unit 35 is connected to the prime mover 36 and the actuator 2ACT.

### <Detailed Configuration and Functions of Device>

### < operation device 33>

The operation device 33 is composed of a control lever and is provided with an operation amount detection device that detects the amount by which the control lever is tilted. The operation amount (i.e., tilt amount) of the control lever by the operator is detected by the operation amount detection device and converted into an electrical signal. In hydraulic excavators, it is generally set so that the greater the amount by which the lever is tilted, the faster the operating speed of the actuator, and the operator operates the work machine by changing the operating speed of each actuator by changing the amount by which the lever is tilted. The operation device 33 may be of a hydraulic pilot type or a type that can be remotely operated, as long as it has equivalent functions.

### <Posture Detection Device 200>

The posture detection device 200 is equipped with an angular velocity sensor and an acceleration sensor in each of the IMU (swing body) 30S, IMU (boom) 20S, IMU (arm) 21S, and IMU (bucket) 22S, and further includes the swing angle sensor 2S. Posture information of the work machine 1 can be obtained from these IMUs and angle sensors. Since the boom 20, arm 21, bucket 22, boom cylinder 20A, arm cylinder 21A, bucket cylinder 22A, link A22B, link B22C, and swing body 3 are each mounted so as to be able to swing, the posture of the boom 20, arm 21, bucket 22, and swing body 3 can be estimated from the mechanical link relationship. The posture detection method shown here is an example, and the relative angle of each part of the work front 2 may be directly measured, or the posture of each part of the work machine 1 may be calculated by detecting the stroke of the boom cylinder 20A, arm cylinder 21A, and bucket cylinder 22A.

### < position sensor 250>

The position sensor 250 includes GNSS (Global Navigation Satellite System), a laser positioning device, and a total station. Position measuring devices other than those mentioned above may be provided as long as they can identify the position of the work machine 1.

### < Drive unit 35>

The drive unit 35 is composed of an electromagnetic control valve and a directional switching valve, and controls the amount of pressure oil supplied to the cylinders and hydraulic motors that drive each part of the work machine in accordance with the motion command value commanded from the main controller 34. The motion command value output from the main controller 34 is converted into pilot pressure by the electromagnetic control valve, and the directional switching valve that controls the operation amount of the actuator is driven by the pilot pressure. The hydraulic fluid whose flow rate is adjusted by the directional switching valve is supplied to the cylinders and hydraulic motors that drive each part of the work machine to drive each movable part. In addition, by adding or changing the configuration, attachments and equipment not included above can be additionally driven.

### <Prime Mover 36>

The prime mover 36 is composed of an engine and a hydraulic pump, and generates the hydraulic pressure necessary for the operation of the work machine 1 as power. In addition to the above, the hydraulic source may be extracted by an electrically driven motor.

### < actuator 2ACT>

The actuator 2ACT is a general term for actuators including boom cylinder 20A, arm cylinder 21A, bucket cylinder 22A, swing hydraulic motor, travel hydraulic motor, etc.

### <Construction Surface Management Device 2000>

The construction surface management device 2000 can set and manage the construction target surface for the work machine 1 using the setting input/display device 100. The construction target surface can be set to have multiple planes in addition to a single plane, and the range that the work front 2 can excavate can be set. The construction target surface may be set relatively with respect to the work machine 1, or may be set in a coordinate system based on the construction site or the earth.

### <Setting Input/Display Device 100>

The setting input/display device 100 can display to the operator the posture of the work machine 1, the area information of the construction target surface set by the construction surface management device 2000, and the distance between the work front 2 and the construction target surface.

### <Main Controller 34>

As shown in FIG. 3, the main controller 34 is connected to the operation device 33, the construction surface management device 2000, the setting input/display device 100, the posture detection device 200, the position measurement device 250, and the drive device 35, and is composed of a posture calculation unit 310, a target surface distance calculation unit 320, a required speed calculation unit 330, an estimated movement trajectory calculation unit 340, a target surface interference determination unit 350, a required speed holding unit 360, a storage unit 370, a speed limit coefficient calculation unit 400, a target speed calculation unit 410, and a motion command value calculation unit 430.

The posture calculation unit 310 calculates the posture of the work machine 1 based on information from the posture detection device 200.

The target surface distance calculation unit 320 calculates the distance to the construction target surface (hereinafter, target surface distance) using the posture and position information of the work machine 1.

The required speed calculation unit 330 calculates the operating speed required for the work machine 1 using the posture of the work machine 1 and the operation amount by the operator.

The estimated movement trajectory calculation unit 340 calculates the estimated movement trajectory (hereinafter, movement trajectory) by estimating the movement of the tip of the bucket using the posture and required speed of the work machine 1.

The target surface interference determination unit 350 determines whether interference between the tip of the bucket and the construction target surface is estimated using the construction target surface information and the movement trajectory.

The required speed holding unit 360 holds the required speed using the required speed, the target surface interference determination result, and the speed limit coefficient, and applies the held required speed to the speed limit coefficient calculation unit.

The storage unit 370 consists of a memory that stores various settings and information input by the setting input/display device 100, and transmits them to each functional unit of the main controller 34.

The speed limit coefficient calculation unit 400 calculates the speed limit coefficient that corrects the required speed according to the posture information of the work machine 1, the target surface distance, the held required speed, and the target surface interference determination result.

The target speed calculation unit 410 calculates the target speed of the actuator 2ACT according to the posture information of the work machine 1, the target surface distance, the required speed, and the speed limit coefficient.

The motion command values calculation unit 430 generates motion command values for controlling the drive device 35 based on the target speed of the actuator 2ACT calculated by the target speed calculation unit 410.

### <Device Operation and Calculation Method>

### <Machine Control Operation>

In Machine Control, the controller controls the operation of the work machine so that the work implement of the work machine 1, which is driven based on the operator's operation, operates without going below the construction target surface. For example, when operating the front toward the target surface to perform excavation with the bucket, the front speed is decelerated from the stage of approaching to bring the tip of the bucket closer to the target surface so that the position of the tip of the bucket does not deviate from the target surface, and if the tip of the bucket is on the target surface, the front operation is limited so that it does not move further below the target surface. This control is implemented by calculating the operator's required speed, which quantitatively gives the operation required by the operator, and calculating the target speed based on the calculation result of the speed limit coefficient.

### <Required Speed Calculation Method: Required Speed Calculation Unit 330>

One method for calculating the operator's required operation is to calculate the required speed vector based on the lever operation amount. The work machine 1 is entirely mechanically connected, and since the actuator operation corresponds one-to-one to the lever operated by the operator, the lever operation amount can be obtained as the speed of each actuator, that is, the required speed. Therefore, for example, it is possible to express as a vector the direction and extent to which the tip of the bucket 22 (hereinafter simply referred to as the tip) moves in response to the lever operation amount.

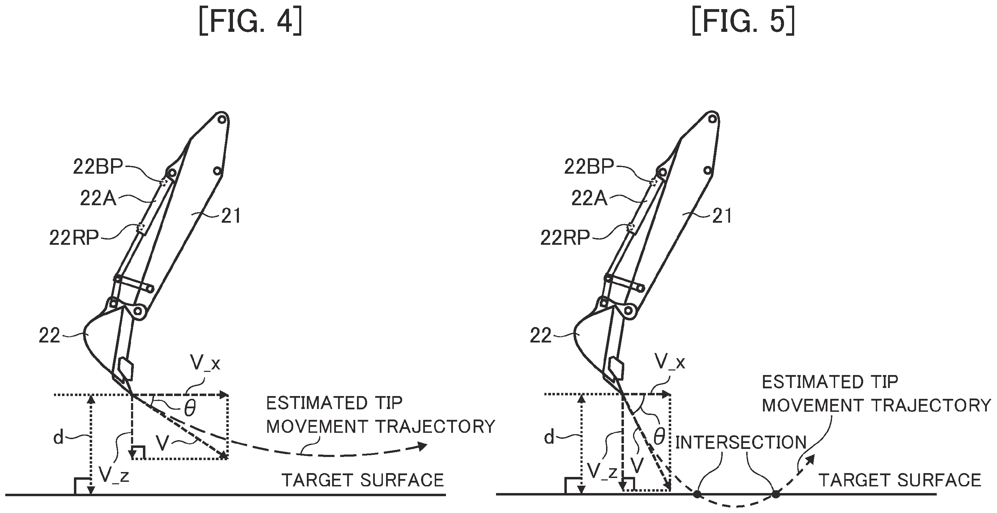

FIGS. 4 and 5 are diagrams showing the relationship between the target surface and the estimated movement trajectory of the tip of the bucket.

In the case shown in FIG. 4, the vector refers to the dotted arrow extending diagonally downward to the right from the tip of the bucket. Furthermore, if the required speed defined as above is defined as V, the required speed V is decomposed into a velocity component V_x parallel to the construction target surface, defined by the dotted arrow extending to the right from the tip of the bucket, and a velocity component V_z perpendicular to the construction target surface, defined by the dotted arrow extending downward from the tip of the bucket. Hereinafter, the component parallel to the construction target surface is defined as the x component, and the component perpendicular to the construction target surface is defined as the z component.

In the above explanation, a method of calculating the required operation vector based on the lever operation amount was shown as one method of calculating the operator's required operation, but methods other than the above may be used as long as the operator's required operation can be calculated or determined. Also, V_x and V_z may be corrected by a certain correction value α based on the mass of the work machine. As an example of the correction value α, for example, when a sudden lever operation is made, by setting a maximum value for the time change amount of the required speed so that acceleration and deceleration can be performed smoothly except in emergencies, and setting it to a value that does not exceed this, it is possible to perform operations that follow the operator's intuition that heavy objects are difficult to accelerate and decelerate (this is also an operation that follows physical properties).

### <Target Surface Distance Calculation Method: Target Surface Distance Calculation Unit 320>

As shown in FIG. 4, the target surface distance is defined and calculated as the shortest distance d between the tip of the bucket and the construction target surface. Methods other than the above may be used as long as a variable can be defined and calculated such that the value becomes smaller as the distance between the work machine 1 and the construction target surface becomes closer.

### <Calculation Method of Z Component Speed Limit Coefficient: Speed Limit Coefficient Calculation Unit 400>

The speed limit coefficient of the z component is calculated from the required speed component V_z perpendicular to the construction target surface and the target surface distance d, and is a dimensionless quantity defined as b_z. Here, the closer b_z is to 0, the stronger the speed limit is applied, the closer b_z is to 1, the weaker the speed limit is applied, and when b_z equals 1, it means no speed limit is applied. Furthermore, as shown in (Eq. 1), (Eq. 2), and (Eq. 3) below, b_z=0 when d=0, and b_z=1 at a certain target surface distance d1, and when d is greater than 0 and less than d1, b_z has a larger value in the range greater than 0 and less than 1 as d increases (i.e., the rate of change b_z' of b_z with respect to d has a positive value), and when d is d1 or greater, it is characterized by having a constant value of b_z=1. In general, d1 takes a larger value as V_z increases, but d1 may take any value as long as the work implement of the work machine 1 operates without going below the construction target surface. When b_z calculated by the above method is finally transmitted to the target speed calculation, this control is called "deceleration control".$d = 0 ; b _ z = 0$ (Eq. 1) $0 < d < d 1 ; 0 < b _ z < 1 and b _ z ′ > 0$ (Eq. 2) $d > = d 1 ; b _ z = 1$ (Eq. 3)

Note that b_z calculated by deceleration control may be rejected depending on the positional relationship between the target surface and the estimated movement trajectory described later, and may be defined by another value that is 0 or more and 1 or less.

### <Calculation Method of X Component Speed Limit Coefficient in Deceleration Control: Speed Limit Coefficient Calculation Unit 400>

The x component speed limit coefficient b_x is calculated by the following (Eq. 4) using the z component speed limit coefficient b_z calculated by the above method.$b _ x = b _ z$ (Eq. 4)

Note that b_z calculated by deceleration control may be rejected depending on the positional relationship between the target surface and the estimated movement trajectory described later, and may be defined by another value that is 0 or more and 1 or less.

### <Estimated movement trajectory Calculation Method: Estimated Tip of the Bucket Movement Trajectory Calculation Unit 340>

The estimated movement trajectory is defined by the current posture of the work machine 1 and the x component V_x and z component V_z of the required speed. First, as shown in FIG. 4 and Eq. 5, the vector direction θ of the required speed is defined by V_x and V_z.$θ = {Tan}^{∧} \left(-1\right) \left(V_x/V_z\right)$ (Eq. 5)

Next, assuming that the required speed is the speed given by the boom and arm of the work machine 1, the ratio of the operation amounts of the boom and arm to achieve θ is uniquely determined. Here, if it is assumed that the work machine 1 operates while keeping the operation amount ratio constant thereafter, it draws a trajectory that is convex downward passing through the current bucket tip, as shown in FIG. 4. Such a trajectory is defined as the "estimated movement trajectory".

The estimated movement trajectory may be defined over the entire range of motion of the boom and arm of the work machine 1, or a certain effective length β may be separately defined and the trajectory may be defined within that range. Also, if the estimated movement trajectory can be estimated more accurately by a method other than the above, the estimated movement trajectory may be defined by that method. As the effective length β, for example, it is conceivable to define the shorter of the length when predicted up to a predetermined time later and the length when predicted to the end of the range of motion. It is also conceivable to determine the effective length β taking into account the surrounding environment and calculation cost at the time of prediction.

### <Calculation Method of Positional Relationship Between Construction Target Surface and Estimated movement trajectory: Target Surface Interference Determination Unit 350>

The estimated movement trajectory may not have an intersection with the construction target surface as shown in FIG. 4, or may have an intersection with the construction target surface as shown in FIG. 5. The positional relationship between the construction target surface and the estimated movement trajectory can be determined as follows: for example, assuming a two-dimensional plane model and defining the construction target surface as a straight line at z=0, if the positive/negative sign of the z coordinate of the entire estimated movement trajectory is always constant, it has no intersection with the construction target surface, and if the sign switches, it can be determined that it has an intersection with the construction target surface.

If determination is possible, other numerical models may be defined and calculated.

### <Definition and Calculation Method of Limit Release Control>

When the positional relationship calculation determines that the construction target surface and the estimated movement trajectory do not have an intersection with each other, as shown in FIG. 4, the value of the z-component speed limit coefficient b_z calculated by the deceleration control is rejected, and b_z=1 is applied instead. At the same time, the value of the x-component speed limit coefficient b_x is also applied as b_x=1.

Here, situations where b_x=b_z=1 are assumed to occur due to (State 1) and (State 2) shown below.

State 1: When d>=d1, regardless of the relationship between the construction target surface and the estimated movement trajectory

State 2: When the construction target surface and the estimated movement trajectory do not have an intersection with each other, and d<d1

In (State 1), it is defined as being in a "deceleration control" state, and in (State 2), it is defined as being in a "limit release control" state. The "limit release control" is characterized by rejecting the calculation result based on the positional relationship between the construction target surface and the estimated movement trajectory, and setting the target speed to the same value as the requested speed, in cases where a target speed smaller than the requested speed would have been calculated if the tip speed of the bucket had been controlled solely by the magnitude of the target surface distanced.

Furthermore, (State 3) is defined as follows.

State 3: When the construction target surface and the estimated movement trajectory have an intersection with each other, and d<d1

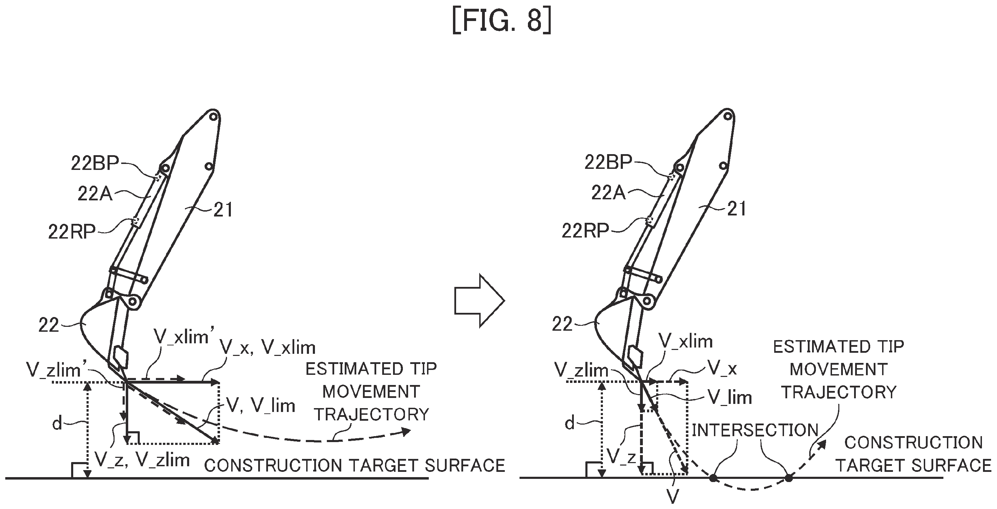

In situations where switching occurs from (State 1) to (State 3), deceleration control can be continued, but in situations where switching occurs from (State 2) to (State 3), as shown in FIG. 8, the temporal changes in b_x and b_z become significantly large, and there is concern about the risk of the construction target surface and bucket interfering because control cannot keep up. Therefore, calculations to reduce this risk are performed using the method described below.

### <Definition of Held Tip Speed Vector: Requested Speed Holding Unit 360>

In the limit release control state, assuming a situation where switching occurs from (State 2) to (State 3), the current requested speed is recorded in the requested speed holding unit to correspond to the calculation method described below. The speed vector configured based on the recorded requested speed is called the held tip speed vector V_hold.

### <Calculation Method When Switching from Limit Release Control State to a State Where Estimated Movement Trajectory Interferes with Construction Target Surface>

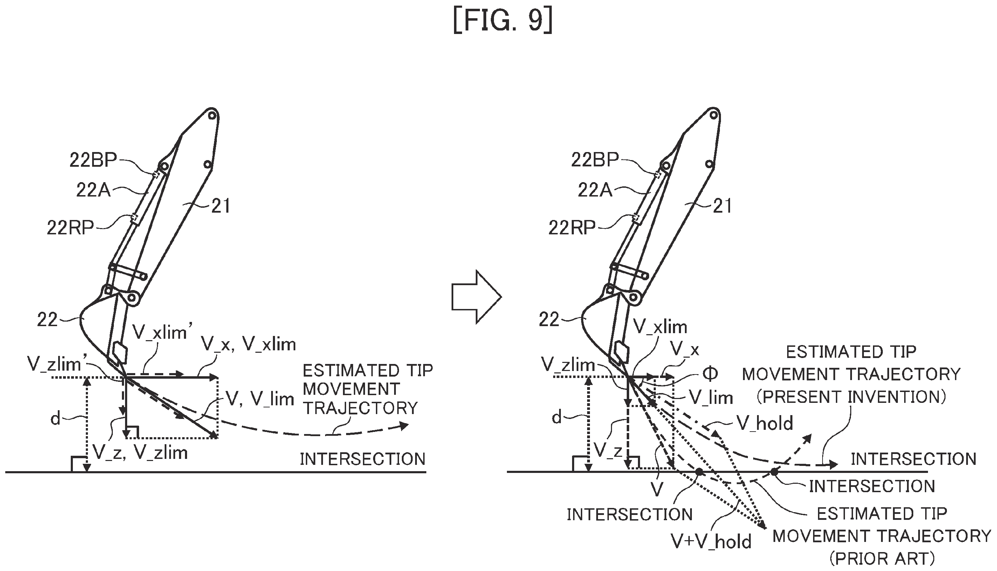

When switching from (State 2) to (State 3) in the limit release control state, it is defined as "limit release deviation". In the "limit release deviation" state, as shown in FIG. 9, the combined vector direction Φ defined by the vector V+V_hold, which is the combination of the current tip speed vector V and the held tip speed vector V_hold held in the requested speed holding unit, is calculated. Furthermore, the z-component speed limit coefficient b_z is determined by, for example, any of the above (Eq. 1), (Eq. 2), and (Eq. 3),,and the x-component speed limit coefficient b_x is calculated based on Φ and the x-component requested speed V_x. Note that b_z may be determined by another method as long as the construction target surface and the tip of the bucket do not interfere.

### <Calculation Method for Target Speed>

The x-component V_xlim of the target speed V_lim is calculated by the x-component speed limit coefficient b_x and the x-component V_x of the requested speed V as shown in (Eq. 6) below, and the z-component V_zlim of the target speed V_lim is calculated by the z-component speed limit coefficient b_z and the z-component V_z of the requested speed V as shown in (Eq. 7) below.$V _ xlim = b _ x \times V _ x$ (Eq. 6) $V _ zlim = b _ z \times V _ z$ (Eq. 7)

An example of calculation and operation is shown in FIG. 9. For example, when the estimated movement trajectory is in a positional relationship where it does not have an intersection with the construction target surface, the above (Equation 4) holds, and V_xlim equals V_x, and V_zlim equals V_z. Also, if it corresponds to (State 2), the target speeds V_xlim' and V_zlim' that would be calculated if the tip speed of the bucket had been controlled solely by the magnitude of the target surface distance d are also potentially calculated, but are actually rejected.

Next, consider the case where the requested speed V changes and switches to (State 3). In the conventional technology, the target speed was given in a vector direction equal to the requested speed vector, so the estimated movement trajectory does not change due to control. Therefore, when switching to (State 3) in a state where the target surface distance d is small, there is a risk that the construction target surface and the tip of the bucket will interfere because control cannot keep up. In contrast, in the present invention, the target speeds V_xlim and V_zlim are given in a vector direction equal to the vector direction Φ defined by the vector V+V_hold, which is the combination of the current tip speed vector V and the held tip speed vector V_hold held in the requested speed holding unit, thereby changing the estimated movement trajectory and reducing risk.

### < Control procedure >

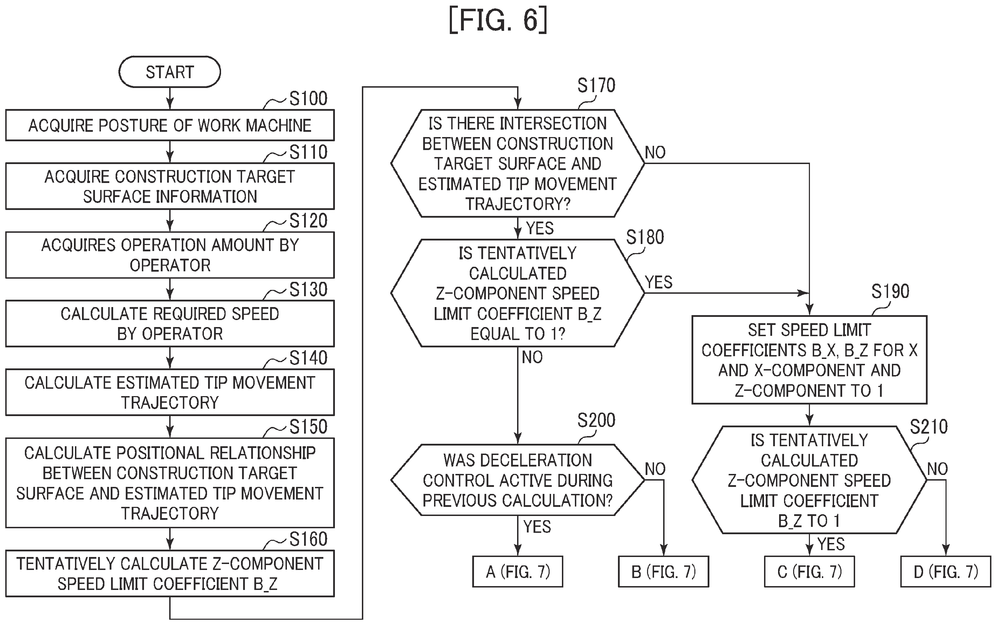

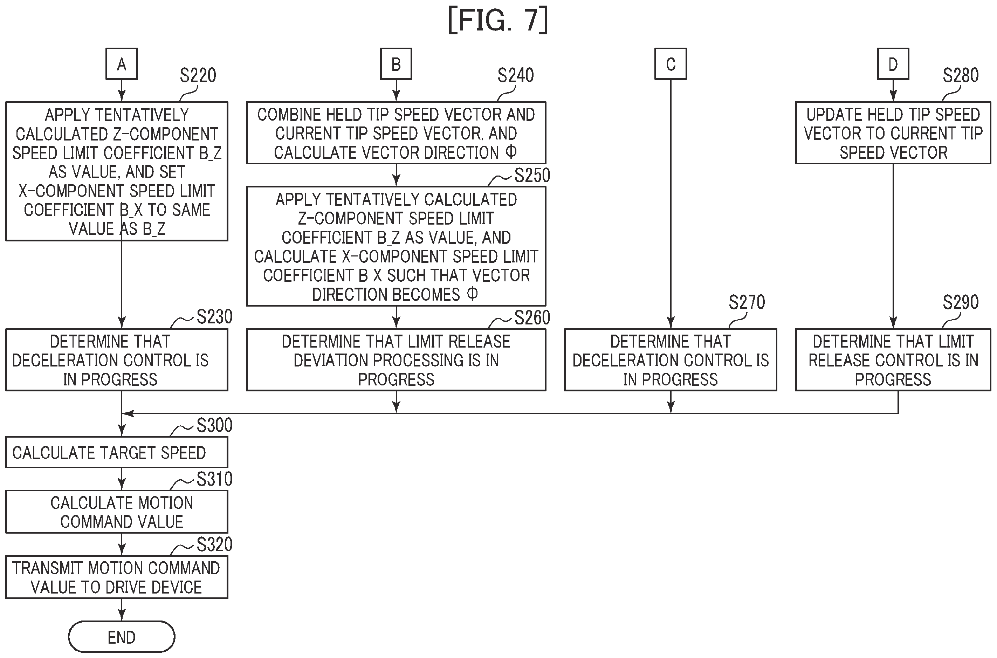

FIGS. 6 and 7 are flow charts showing the processing content of the main controller.

As shown in FIGS. 6 and 7, first, the main controller 34 acquires and calculates the posture of the work machine (Step S100), acquires and calculates information on the construction target surface (Step S110), acquires and calculates the operation amount by the operator (Step S120), calculates the requested speed by the operator (Step S130), calculates the estimated movement trajectory of the tip of the bucket (Step S140), calculates the positional relationship between the construction target surface and the estimated movement trajectory of the tip of the bucket (Step S150), and tentatively calculates the z-component speed limit coefficient b_z based on the target surface distance d (Step S160).

Here, it is determined whether or not there is an intersection between the construction target surface and the estimated movement trajectory of the tip of the bucket (Step S170).

If the determination result in Step S170 is YES, that is, if it is determined that an intersection exists, then it is determined whether or not the z-component speed limit coefficient b_z tentatively calculated in Step S160 is 1 (Step S180).

If the determination result in Step S180 is NO, that is, if the speed limit coefficient b_z is other than 1, then it is determined whether or not the control mode when the processing shown in FIGS. 6 and 7 was previously performed was deceleration control (Step S200). Note that if calculation was not performed immediately before, such as at the start, the determination is made assuming it was deceleration control.

If the determination result in Step S200 is YES, the z-component speed limit coefficient b_z tentatively calculated in Step S160 is applied as the value to be passed to the target calculation unit, and furthermore, the x-component speed limit coefficient b_x is set to the same value as b_z (Step S220), and then it is determined that deceleration control is in progress (Step S230).

Also, if the determination result in Step S200 is NO, that is, if deceleration control was not in effect during the previous calculation, the held tip speed vector and the current tip speed vector are combined, and the vector direction Φ is calculated (Step S240), the z-component speed limit coefficient b_z tentatively calculated in Step S160 is applied as the value to be passed to the target calculation unit, and furthermore, the x-component speed limit coefficient b_x is calculated so that the vector direction becomes Φ (Step S250), and it is determined that limit release deviation processing is in progress (Step S260).

Also, if the determination result in Step S170 is NO (that is, if it is determined that no intersection exists), or if the determination result in Step S180 is YES (that is, if the speed limit coefficient b_z is 1), the speed limit coefficients b_x and b_z for each of the x and z components are set to 1 (Step S190), and then it is determined whether or not the tentatively calculated z-component speed limit coefficient b_z is 1 (Step S210).

If the determination result in Step S210 is YES, that is, if the speed limit coefficient b_z is 1, it is determined that deceleration control is in progress (Step S270).

Also, if the determination result in Step S210 is NO, that is, if the speed limit coefficient b_z is other than 1, the held tip speed vector is updated to the current tip speed vector (Step S280), and it is determined that limit release control is in progress (Step S290).

When any of the processing in Steps S230, S260, S270, and S290 is completed, the target speed is then calculated based on the speed limit coefficients calculated in Step S190 and Step S220 or Step S250 (Step S300).

Subsequently, the motion command value for operating the work machine is calculated (Step S310), the motion command value is transmitted to the drive device (Step S320), and the processing ends.

### <Effects of the Present Embodiment>

As described above, according to the present embodiment, even in the vicinity of the construction target surface, when there is no possibility of deviating from the construction target surface, the bucket can be moved in the direction intended by the operator without unnecessary speed limitation, and even when switching to a state where deviation toward the construction target surface is expected, it is possible to appropriately transition to a deceleration control state, thereby ensuring good operability.

### < Other >

Note that the present invention is not limited to the above embodiments, and includes various modifications within the scope that does not deviate from the gist thereof. Also, for example, the present invention is not limited to those having all the configurations described in the above embodiments, and includes those with some of the configurations deleted. Also, it is possible to add or replace a part of the configuration according to one embodiment with the configuration according to another embodiment. Also, each configuration related to the above controller and the functions and execution processing of each configuration may be realized in part or in whole by hardware (for example, designing logic that executes each function in an integrated circuit). Additionally, the configuration related to the above controller may be a program (software) that realizes each function related to the configuration of the controller by being read and executed by a processing unit (e.g., CPU). Information related to the program can be stored in, for example, semiconductor memory (flash memory, SSD, etc.), magnetic storage devices (hard disk drives, etc.), and recording media (magnetic disks, optical disks, etc.).

### Description of Reference Characters

1: work machine, 2: work front, 2ACT: actuator, 2S: swing angle sensor, 3: swing body, 4: travel body, 20: boom, 20A: boom cylinder, 20BP: pressure sensor (boom bottom), 20RP: pressure sensor (boom rod), 20S, 21S, 22S, 30S... IMU (inertial measurement unit), 21: arm, 21A: arm cylinder, 21BP: pressure sensor (arm bottom), 21RP: pressure sensor (arm rod), 22: bucket, 22A: bucket cylinder, 22BP: pressure sensor (bucket bottom), 22RP: pressure sensor (bucket rod), 31: main frame, 32: operator cabin, 33: operation device, 34: main controller, 35: drive device, 36: prime mover (36a: engine, 36b: hydraulic pump), 37: swing load measurement device, 41: travel motor, 45: crawler track, 100: setting input/display device, 200: posture detection device, 250: position measurement device, 310: posture calculation unit, 320: target surface distance calculation unit, 330: required speed calculation unit, 340: estimated toe movement trajectory calculation unit, 350: target surface interference determination unit, 360: required speed holding unit, 370: storage unit, 400: speed limit coefficient calculation unit, 410: target speed calculation unit, 430: motion command value calculation unit, 2000: construction surface management device, A22B, B22C: link

## Claims

1. A work machine comprising:
a travel body;
an upper swing body swingably mounted with respect to the travel body;
a work implement attached to the upper swing body and having a bucket that is swingable at least in a vertical direction;
an actuator configured to drive each of the upper swing body and the work implement;
an operation device configured to operate the actuator; an operation amount detection device configured to detect an operation amount of the operation device;
a posture detection device configured to detect a posture of each of the upper swing body and the work implement;
a target surface setting device configured to set a target surface to be excavated by the bucket;
a controller configured to calculate a required motion direction for the bucket based on the operation amount detected by the operation amount detection device and to calculate a motion command value for the actuator such that the bucket does not exceed the target surface based on the required motion direction; and
a drive device configured to drive the actuator based on the motion command value from the controller, wherein
the controller is configured to
calculate an estimated movement trajectory of a tip of the bucket based on the posture of the work implement and the required motion direction, and calculate a positional relationship between the target surface and the estimated movement trajectory;
in a case it is determined, based on the calculated positional relationship, that the estimated movement trajectory intersects with the target surface, limit a tip speed of the bucket while maintaining the required motion direction; and
in a case it is determined, based on the calculated positional relationship, that the estimated movement trajectory does not intersect with the target surface, control the tip speed of the bucket according to a tip speed based on an operation signal output by the operation device.

2. The work machine according to claim 1, wherein
when it is determined that the estimated movement trajectory does not intersect with the target surface and while the tip speed is being controlled based on the operation signal output by the operation device, if the estimated movement trajectory changes into a state of intersecting with the target surface, the controller calculate a target tip speed by using, as a reference, a resultant vector direction of the required motion direction and an actual tip speed vector calculated from values obtained from a posture sensor.

3. The work machine according to claim 2, wherein
the controller is configured to
correct the actual tip speed vector by using a correction value calculated based on mass of the work implement.

4. The work machine according to any one of claims 1 to 3, wherein
the controller is configured to
set an effective length of the estimated movement trajectory to a prescribed value determined in advance by using the tip of the bucket as a start point, and
calculate the positional relationship between the target surface and the estimated movement trajectory within a range of the effective length.
